# EUROPEAN PATENT SPECIFICATION

(11) **EP 1 343 710 B1**
(45) Date of publication and mention of the grant of the patent: **11.05.2005**
(21) Application number: 00976101.6
(22) Date of filing: 08.11.2000
(51) Int. Cl.: B65G 53/30

(54) **METHOD AND APPARATUS FOR FEEDING SLUDGE INTO A PROCESS**
VERFAHREN UND VORRICHTUNG ZUR ZUFUHR VON SCHLAMM IN EINEN PROZESS
PROCEDE ET APPAREIL POUR ALIMENTER UNE BOUE DANS UN CIRCUIT DE TRAITEMENT

(43) Date of publication of application: 17.09.2003
(73) Proprietor: Fortum OYJ, 02150 Espoo (FI)
(72) Inventor: JOKELA, Pekka, FIN-01710 Vantaa (FI); ALIN, Jari, FIN-02320 Espoo (FI); SALOKOSKI, Pia, FIN-02320 Espoo (FI)
(74) Representative: Hovi, Simo
(86) International application number: PCT/FI2000/000973
(87) International publication number: WO 2002/040386

(56) References cited:
- DE-A1- 2 550 295
- DE-A1- 2 717 920
- DE-A1- 3 150 671
- US-A- 5 681 132

## Description

The present invention relates to a method, according to the preamble to Claim 1, for feeding sludge into a space through which a flow of gas travels. Such a device is typically a steam dryer, in which superheated steam flows and which dryer is generally pressurized.

The invention also relates to an apparatus intended to apply the invention.

In this disclosure, sludge refers to a watery substance containing a great amount of organic material, and which may also contain other solids.

Various sludges containing organic substances arise, for example, in the treatment of municipal sewage, in the foodstuffs industry, and in other industries, such as the timber-processing industry, that process organic substances. These wastes take up a considerable space, the space required being increased by the large amount of water they contain, so that often such wastes can no longer be disposed of in landfill. Therefore, waste sludge must be either destroyed or else processed into a usable form. Unless the sludge contains heavy metals or other toxic substances, it can be used as a soil improver or as infill, either as such, or more usually after composting. Though composting destroys harmful bacteria, most of the heavy metals and toxic chemical compounds remain in the final product, limiting the use of the sludge. If the sludge is burned, the harmful substances can be destroyed or removed by combustion at a sufficiently high temperature and treating the flue gases with suitable cleaning methods. Burning is made more economical by the fact that sludges containing organic substances have a reasonably high thermal value, allowing useful energy to be obtained from them, if they can be dried sufficiently before combustion. Sludges can indeed be used to produce energy, with the aid of the combustion systems of modem dryers.

From the point of view of energy production, sludge should naturally be as dry as possible. Using unheated evaporation or pressing to dry sludge consumes little energy, but takes a great deal of time, if the aim is to substantially raise the dry solids content. Though sludge is usually pre-dried by evaporation, straining, and draining, thus removing a large amount of liquid, these drying methods normally only raise the sludge's dry solids content to a level of 10 - 15 %, or 20 % at most, depending on the method used. Sludge must therefore be dried before burning, to ensure that the combustible material it contains is burned completely. Drying can take place using, for example, a steam dryer, a fluidized-bed dryer, or a circulating fluidized-bed dryer, which take their energy from the combustion process. In these dryers, the heat from the combustion process is transferred using either a circulating fluidized substance, or steam, preferably superheated, generated in a boiler.

Dryers are usually pressurized, which creates the problem of how to feed sludge through the pressure-difference boundary. As sludge becomes very difficult to pump when its dry solids content increases from a few percent by more than five percent, material with a dry solids content above 10 % is difficult to pump, requiring the use of special pumps. Forced-feed devices such as screw conveyors can be used, but as they are not pressure-tight, they must be placed in a pressurized space and the feed to the conveyor carried out through a pressure lock or similar. Such a solution is quite expensive.

In one known dryer solution, sludge being dried is circulated in the dryer, wet sludge being mixed with the circulating dry sludge. The dryer is a space, in which steam and sludge flow, supported by the flow of steam. Wet sludge is fed with a feed screw. The sludge-feed opening is in the side of the dryer, from which the sludge moves randomly into the dryer's steam flow, allowing wet sludge to adhere to the sides of the dryer. Therefore, it is essential to circulate the dried sludge, to keep the dyer pipe clean and the feed device operating. This solution has the drawback that, in terms of drying, a large flow of sludge circulates through the dryer quite unnecessarily. This large internal circulation demands large process equipment and a large internal consumption of electricity, which is needed almost entirely to create the steam velocity required to transport the sludge, i.e. to drive the steam fan.

The invention is intended to eliminate the defects of the state of the art disclosed above and for this purpose create an entirely new type of method, by means of which sludge can be fed economically and simply to a process, preferably to a pressurised space.

The invention is based on feeding the sludge into an enclosed space by extruding it through at least one nozzle with its opening set at a distance from the side of the space, and setting the flow velocity of the gas being fed into the space at a rate least sufficient to transport the sludge pneumatically in the space.

According to one preferred embodiment, an eccentric screw pump is used to squeeze the sludge into a limited, for instance, pressurized space.

More specifically, the method according to the invention is characterized by what is stated in the characterizing section of Claim 1.

The arrangement according to the invention is, in turn, characterized by what is stated in the characterizing section of Claim 10.

Considerable advantages are gained with the aid of the invention.

The system according to the invention is particularly advantageous in systems in which sludge is fed into a pressurized space, as the mass flow of the sludge can be regulated and pressurized using the same device. Investment costs are then small. Pressurization can take place using an eccentric screw pump and no pressurized intermediate spaces are required. Eccentric screw pumps are series-production devices and economical in price. The simplicity of the system and the small number of components also minimize service and space requirements. A single feed line advantageously requires only two electric motors, one in the pump and the other in the fuel-hopper mixer.

Because the nozzle is used to carry the sludge being processed to the centreline of the dryer pipe or other space, the sludge is transported in the centre by the gas flowing in the space, so that as little as possible of the wet, highly adhesive sludge strikes the sides. Should a vortex, for example, carry sludge towards the side, it has time to dry and no longer sticks to the sides so easily, substantially reducing dirtying. Sludge dries rapidly in the start of the dryer pipe and its surface acquires properties that reduce adhesion.

If the sludge is fed using an eccentric screw pump, the pump can be used to dose the sludge, because its output is very even, even at low revolutions. At a constant pressure, the pump's output depends almost linearly on the pump's speed of rotation, so that the mass flow being fed can be easily regulated with the pump. Sludge has the advantages over other fuels requiring drying of being homogenous and easily pumped. Extrusion and the use of a nozzle exploit these properties. The feed of sludge through an extrusion nozzle to a dryer or similar process is controlled and the mass flow is even. The operation of the screw feeders widely used in various feed systems is very much less precise, especially with adhesive substances like sludge. A nozzle can be used to feed sludge to the process space as a narrow band, which easily breaks up in the flow and disintegrates into smaller pieces. This increases the specific surface area of the sludge and makes it easier to dry. If a feed screw is used, the pieces of sludge have an entirely random size, with a diameter of up to 10 cm, because the sludge enters the space in thicker pieces, which do not easily disintegrate. Such pieces of sludge are not drawn into the steam flow and do not dry, besides which there is a danger of wet, viscous sludge accumulating at the bottom of the process space.

The invention is based on exploiting the sludge's properties that make it difficult to feed the fuel. The wetness of the sludge can be seen as an advantage that permits the use of existing commercially-available, economical components in an otherwise demanding environment.

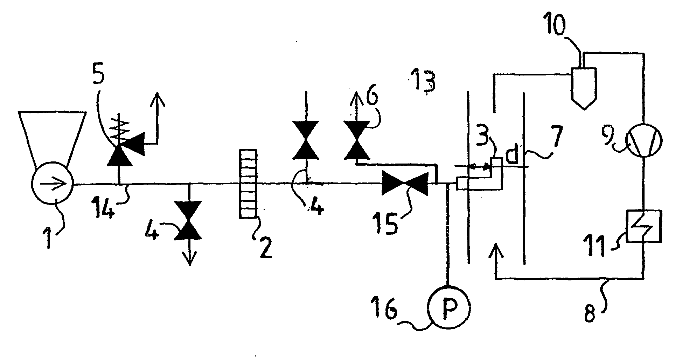

In the following, the invention is examined in greater detail with the aid of the accompanying drawing, which shows one preferred embodiment of the invention.

The system according to the figure shows a dryer arrangement based on a steam dryer with two main circuits, a sludge feed circuit and a dryer circuit. Each dryer circuit has several separate feed circuits, the number of which depends on the dryer's capacity. Usually, there are 2 - 3 feed circuits to each dryer. In this embodiment, dryer 7 comprises a vertical pipe, in which superheated steam flows upwards from the bottom. At the sludge feed-point, the dryer has a diameter of 20 - 60 cm, depending on the process conditions and the dryer's capacity. The steam in the dryer is circulated in steam circuit 8 by fan 9. Steam circuit 8 starts from the upper part of dryer 7 and leads first to cyclone 10, which separates dried solid fuel from the mass flow coming from the dryer, after which the steam is led to fan 9. From fan 9, the steam is led to heat exchanger 11, where it is superheated to the temperature required by dryer 7. The superheated steam is led to the lower part of dryer 7 and given a sufficient velocity for it to transport in the sludge flow the material to be dried.

The sludge feed circuit includes an eccentric screw pump 1, which feeds the sludge to the feed circuit. After pump 1, the circuit has a safety device 5 comprising, for example, a safety valve with detectors and alarm devices. Following safety device 5, there is a sieve 2, to remove excessively large pieces from the sludge flow, with washing connections 4 on either side of the sieve. Before dryer 7, the circuit has also a dump connection 6 and a shut-off valve 15. The circuit ends in the dryer at nozzle 3, which opens into the interior of dryer 7 at a distance d from all the sides 13 of the dryer. Before the nozzle, there is a pressure gauge 16.

The most essential devices of the invention are nozzle 3 and pump 1. Nozzle 3 is located on the centreline of dryer 7, or, if several nozzles are used, in a shape, close to the centreline, determined by the number of nozzles. Nozzle 3 preferably faces upwards, thus bringing the sludge to the point that is the most advantageous to the operation of the dryer. As it is preferable to feed the sludge into the dryer as the narrowest possible band to ensure a good drying result and a rapid start to drying, the mouth of the nozzle should be as small as possible. However, as a small-diameter nozzle will block easily, a round nozzle should preferably have a diameter of about 10 mm, or a dimension giving a corresponding free opening, if some other shape of nozzle is used. Because the sludge is fed from the nozzle by extrusion, its velocity in the nozzle is low and limited, nor will the sludge flow disintegrate due to its own velocity, instead, the sludge squeezes out of the nozzle as a solid volume flow, with an upper limit set by the diameter of the nozzle.
Thus, the nozzle's feed capacity cannot be substantially raised by increasing the feed pressure, as it can when feeding liquids and gases, instead, a sufficient number of nozzles must be used to ensure the desired feed capacity.

As sludge becomes a flowing paste-like substance once it reaches a sufficient dry solids content, its pressure is not constant throughout its entire volume as in liquids and gases, and it cannot be handled using impeller pumps to increases the pressure. Thus, sludge must be moved mechanically by extrusion. The use of an eccentric screw pump is one advantageous way to move sludge with a dry solids content of 0 - 20 or even 25 %. An eccentric screw pump has an eccentrically rotated screw rotor fitted inside a fixed stator. Tight volumes, formed between the screw and the stator, move parallel to the shaft of the pump. The sealing of the rotor and stator makes the pump is pressure-tight. The pressure within the pump is not raised by the pump itself, which only moves a delimited volume forwards. A required pressure increase is obtained by throttling the flow from the pump, so that, when feeding to a higher pressure, the counter-pressure of the simply pressurized space automatically increases the pressure in the feed pipe after the pump. The constant volume feed means that the volume flow depends solely on the pump's speed of revolution. This makes dosing extremely precise, the process being controllable by altering the amount of the sludge to be fed, while keeping the other mass flows unaltered. A pressure increase of 15 bar can be achieved using standard pumps, while high pressures can be achieved by connecting pumps in series.

In the system according to the invention, after mechanical water separation, the sludge is led to a feed silo, in the bottom of which there is a sufficient number of eccentric screw pumps 1 to achieve the required capacity. Alternatively, there may be several feed silos. At this stage, the sludge's dry solids content is preferably 15 - 25 %, the dry solids content being determined according to the fuel used and the method of drying. The sludge flows from the silo, assisted by a mixer used to break vaulting, directly to the suction connection of pump 1, which increases the pressure in the sludge to the level required by the process. In pressurized processes, such as in the pressurized drying described above, the pressure after the pump may be 4 - 15 bar, but the invention can equally well be applied to atmospheric-pressure processes and to processes operating at higher pressures. In pressurized processes, the invention has greater benefits over known solutions. The sludge is led from the pump's pressure connection through piping 14 to the sludge nozzle in the dryer.

The sludge nozzle is set at a distance from the side of the dryer and preferably faces upwards. The nozzle is as far as possible from the nearest side, at least at a distance that will allow the sludge extruding from the nozzle to be kept away from the side of the dryer by the steam flowing in the dryer, so that the sludge will not directly strike the side of the dryer. The tip of nozzle 3 is preferably at a distance from the nozzle's shaft pipe that extends from the side of the dryer. This distance should be great enough for the turbulence caused in the steam flow by the shaft pipe to have time to even out. The nozzle can certainly be set transversely to or against the flow of steam, but this will lead to the problems of turbulence and the dirtying of the nozzle shaft pipe. Thus, it is preferable to orient the nozzle with the steam flow and most preferably parallel to the steam flow.

As sludge containing even a few percent of dry solids is a quite cohesive substance, it cannot be disintegrated simply by the pressure in the nozzle. Thus, our invention is based on extruding the sludge from the nozzle as a uniform mass flow. In this case, a uniform mass flow refers to a flow that does not disperse at the tip of the nozzle due to its own velocity, but which remains unified, unless external forces act upon it. The mass flow is disintegrated by the gas flowing in the process space, this being possible because the band of sludge being extruded from the nozzle is sufficiently thin. For disintegration to take place and to prevent sludge falling onto the bottom of the space, the flowing gas must have a velocity sufficient for the gas flow at the point of the nozzle to support the sludge. As the thin mass flow begins to dry and disintegrate immediately, it is easily swept along with the gas flow. Thus, the circulating gas must have a velocity such that it can transport the sludge pneumatically in the space. Another corresponding definition is that the circulating gas must have a velocity dimensioned according to the terminal velocity of the particles of the fed wet sludge. As the sludge starts to dry immediately, it lightens and is easily swept along with the flow, even if the velocity of the circulating gas does not exceed the terminal velocity of the wet sludge. In practice, the steam in steam dryers has a velocity at least sufficient to transport the sludge immediately from the mouth of the nozzle.

The minimum size of the nozzle is determined by the nozzle's tendency to become blocked by larger particles or pieces in the sludge. These can be removed by equipping the feed system with a system that will remove blockages while the system is operating. One advantageous way to remove blockages is to use the system's own pressure to blow blockages backwards in the nozzle. In the example described above, blockages are removed by closing the route to the pump with valve 15 and opening dump connection 6 to atmospheric pressure. The pressure in the system then blows the blockage backwards and out of the dump pipe. This operation can be automated and will take less than 0.5 s. The feed break lasts about 10 seconds, which will not cause problems in the drying and combustion processes, especially if the system has several feed lines. Blockages can be monitored by measuring the feed-line pressure, when an increase in pressure will indicate a blockage. This cleaning operation can even be automated mechanically, or connected for monitoring by the system's control computer.

If large pieces appear regularly in the sludge, feed line 14 is equipped with a screen 2. Pressure drops over the screen can be monitored in the same way as pressure drops in the nozzle. It is preferable to fit two sieve cartridges in parallel, allowing one to be isolated and flushed with water without interrupting the operation of the process. Feed line 14 is also equipped with appropriate safety devices 5, for instance, rupture membranes.

Sludge preheating can also be added to the feed system. Heating the sludge before the dryer allows drying to start as rapidly as possible. As the sludge is in an extremely adhesive state before drying starts, the fastest possible start and progress of the drying will help to keep the dryer pipe clean. Heating can be direct steam heating, taking steam from the dryer directly to the sludge flow before the pump. Another possibility is to heat the sludge after the pump with a heat exchanger, utilizing steam produced by the dryer or heat from the fuel's flue gases. Advantageous ways of heating the fuel are disclosed in publication WO 94/09321, which is appended to this.

Embodiments of the invention, differing from those disclosed above, can also be envisaged.

The steam required by the dryer can also be produced otherwise than in the example described above. However, it is preferable to use superheated steam. Instead of a steam dryer, the invention can be applied, for example, to a circulating-bed dryer, in which drying energy is brought to the dryer by means of the bed material of a circulating-bed boiler. In this solution, the sludge is extruded into the flow of circulating bed material and the circulating gas. The sludge can be fed using some mechanical method other than an eccentric screw pump, but should a feed screw, for instance, be used, the screw must be located in a pressurized system at a higher pressure, making this solution more expensive. The feed method can be selected more freely in an atmospheric-pressure system.

## Claims

1. A method for feeding sludge into an enclosed space, in which method:
- at least gas, which is given a flow velocity, is fed into the enclosed space (7), and
- the sludge is fed into the space (7),
**characterized in that**
- the sludge is fed into the enclosed space (7) by extruding it through at least one nozzle (3), so that the velocity of the sludge flow does not disintegrate the sludge in the nozzle opening,
- the nozzle opening of the nozzle (3) is arranged at a distance from the side of the space, and
- the flow velocity of the gas to be fed into the space (7) is set to be at least sufficient to transport the sludge pneumatically in the space.

2. A method according to Claim 1, **characterized in that** at least superheated steam in fed into the space (7).

3. A method according to Claim 1 or 2, **characterized in that** the space is pressurized to a pressure greater than the ambient pressure.

4. A method according to Claim 1, **characterized in that** the bed material of a fluidized-bed boiler is fed into the space.

5. A method according to one of the above Claims, **characterized in that** the sludge is fed using an eccentric screw pump.

6. A method according to one of the above Claims, **characterized in that** a state, for example the temperature, of the process taking place in the enclosed space is regulated by altering the mass flow of the sludge, while keeping the other mass flows entering the space unaltered.

7. A method according to one of the above Claims, **characterized in that** the sludge is directed by the nozzle to flow in the direction of flow of the gas flowing in the space.

8. A method according to Claim 1, **characterized in that**, if an increase in pressure is detected in the line (14), the nozzle (3) is cleared by closing the line (14) between the nozzle (3) and the pump and opening a line from the nozzle to the atmospheric pressure.

9. A method according to one of the above Claims, **characterized in that** the sludge is heated before it is fed to the nozzle.

10. An arrangement for feeding sludge into an enclosed space into which gas is fed with a given flow velocity (7), which arrangement includes:
- a feed line (14), and
- a device (1) for feeding the sludge to the feed line (14),
**characterized**
- **by** a nozzle (3) fitted to the end of the feed line (14), the nozzle opening being arranged at a distance from the wall of the enclosed space (7), and through which nozzle the sludge can be extruded into the enclosed space as a uniform band.

11. An arrangement according to Claim 10, **characterized in that** the nozzle opening faces into the direction of flow of the gas, preferably parallel to the direction of flow.

12. An arrangement according to Claim 11, **characterized in that** the nozzle opening is located at such a distance from where the nozzle shaft pipe protrudes from the side (13) of the enclosed space that turbulence caused by the pipe, in the flow around the pipe, is essentially attenuated before the nozzle opening.

13. An arrangement according to Claim 10, **characterized in that** the device for feeding the sludge is an eccentric screw pump (1).

14. An arrangement according to Claim 10, **characterized by** a valve (15) for cutting off the flow in the feed line (14) and by a dump connection fitted to the line (14) between the valve (15) and the nozzle (3).

15. An arrangement according to Claim 13, **characterized by** a member (16) for measuring the pressure in the feed line (14).

## Patentansprüche

1. Verfahren zur Zufuhr von Schlamm in einen umschlossenen Raum, wobei bei dem Verfahren:
- zumindest Gas, das eine vorgegebene Strömungsgeschwindigkeit aufweist, in den umschlossenen Raum (7) zugeführt wird und
- der Schlamm in den Raum (7) zugeführt wird,
**dadurch gekennzeichnet, dass**
- der Schlamm in den umschlossenen Raum (7) mittels Spritzen durch zumindest eine Düse (3) so zugeführt wird, dass die Schlammströmungsgeschwindigkeit den Schlamm in der Düsenöffnung nicht zersetzt,
- die Düsenöffnung (3) in einem Abstand von der Seite des Raums angeordnet ist und
- die Strömungsgeschwindigkeit des in den Raum (7) zuzuführenden Gases so eingestellt wird, dass sie zumindest ausreicht, den Schlamm pneumatisch in den Raum zu befördern.

2. Verfahren nach Anspruch 1,
**dadurch gekennzeichnet,**
**dass** zumindest überhitzter Dampf dem Raum (7) zugeführt wird.

3. Verfahren nach Anspruch 1 oder 2,
**dadurch gekennzeichnet,**
**dass** der Raum unter Druck gesetzt wird, der größer ist als der Umgebungsdruck.

4. Verfahren nach Anspruch 1,
**dadurch gekennzeichnet,**
**dass** das Bettmaterial eines Fließbetterhitzers dem Raum zugeführt wird.

5. Verfahren nach einem der vorhergehenden Ansprüche,
**dadurch gekennzeichnet,**
**dass** der Schlamm mittels einer Exzenterschneckenpumpe zugeführt wird.

6. Verfahren nach einem der vorhergehenden Ansprüche,
**dadurch gekennzeichnet,**
**dass** ein Zustand, beispielsweise die Temperatur, des in dem umschlossenen Raum stattfindenden Prozesses durch Ändern des Massenflusses des Schlamms reguliert wird, während die anderen in den Raum gelangenden Massenflüsse unverändert bleiben.

7. Verfahren nach einem der vorhergehenden Ansprüche,
**dadurch gekennzeichnet,**
**dass** der Schlamm durch die Düse so gerichtet wird, dass er in Richtung der Gasströmung in dem Raum strömt.

8. Verfahren nach Anspruch 1,
**dadurch gekennzeichnet,**
**dass** falls ein Druckanstieg in der Leitung (14) erfasst wird, die Düse (3) durch Schließen der Leitung (14) zwischen der Düse (3) und der Pumpe sowie Öffnen einer Leitung von der Düse zum Atmosphärendruck freigemacht wird.

9. Verfahren nach einem der vorhergehenden Ansprüche,
**dadurch gekennzeichnet,**
**dass** der Schlamm erhitzt wird, bevor er zur Düse gefördert wird.

10. Anordnung zum Zufuhren von Schlamm in einen umschlossenen Raum (7), dem Gas mit einer vorgegebenen Strömungsgeschwindigkeit zugeführt wird, wobei die Anordnung aufweist:
- eine Zufuhrleitung (14) und
- eine Vorrichtung (1) zur Zufuhr des Schlamms zu der Zufuhrleitung (14),
**gekennzeichnet**
- **durch** eine auf das Ende der Zufuhrleitung (14) gesetzte Düse (3), wobei die Düsenöffnung in einem Abstand von der Seite des umschlossenen Raums (7) angeordnet ist und der Schlamm durch die Düse in den umschlossenen Raum als ein gleichförmiger Streifen gespritzt werden kann.

11. Anordnung nach Anspruch 10,
**dadurch gekennzeichnet,**
**dass** die Düsenöffnung in Richtung des Gasströmung zeigt, bevorzugt parallel zur Strömungsrichtung.

12. Anordnung nach Anspruch 11,
**dadurch gekennzeichnet,**
**dass** die Düsenöffnung in einem solchen Abstand von dem Ort angeordnet ist, an dem das Düsenschaftrohr von der Seite (13) des umschlossenen Raums vorsteht, dass durch das Rohr verursachte Turbulenzen in der Rohrumströmung im wesentlichen vor der Düsenöffnung beruhigt werden.

13. Anordnung nach Anspruch 10,
**dadurch gekennzeichnet,**
**dass** die Vorrichtung zur Zufuhr des Schlamms eine Exzenterschneckenpumpe (1) ist.

14. Anordnung nach Anspruch 10,
**gekennzeichnet**
**durch** ein Ventil (15) zum Abschließen der Strömung in der Zufuhrleitung (14) und eine in die Leitung (14) zwischen dem Ventil (15) und der Düse (3) eingefügte Entlastungsverbindung.

15. Anordnung nach Anspruch 13,
**gekennzeichnet**
**durch** ein Element (16) zum Messen des Drucks in der Zufuhrleitung (14).

## Revendications

1. Procédé pour introduire de la boue dans un espace clos, procédé au cours duquel :
- au moins un gaz, auquel une vitesse d'écoulement est donnée, est introduit dans l'espace clos (7),
et
- la boue est introduite dans l'espace (7),
**caractérisé en ce que**
- la boue est introduite dans l'espace clos (7) en l'extrudant à travers au moins une buse (3) de telle manière que la vitesse de l'écoulement de boue ne désintègre pas la boue dans l'ouverture de buse,
- l'ouverture de buse de la buse (3) est agencée à une certaine distance de la paroi de l'espace, et
- la vitesse d'écoulement du gaz devant être introduit dans l'espace (7) est réglée de manière à être au moins suffisante pour transporter la boue par effet pneumatique dans l'espace.

2. Procédé selon la revendication 1, **caractérisé en ce que** de la vapeur au moins surchauffée est introduite dans l'espace (7).

3. Procédé selon la revendication 1 ou 2, **caractérisé en ce que** l'espace est pressurisé à une pression supérieure à la pression ambiante.

4. Procédé selon la revendication 1, **caractérisé en ce que** la substance de lit d'une chaudière à lit fluidisé est introduite dans l'espace.

5. Procédé selon l'une des précédentes revendications, **caractérisé en ce que** la boue est introduite au moyen d'une pompe à vis excentrique.

6. Procédé selon l'une des précédentes revendications, **caractérisé en ce qu'**un état, par exemple la température, du processus en cours dans l'espace clos est régulé en modifiant le débit massique de la boue tout en maintenant les autres débits massiques entrant dans l'espace à un niveau identique.

7. Procédé selon l'une des précédentes revendications, **caractérisé en ce que** la boue est dirigée par la buse de façon à s'écouler dans la direction d'écoulement du gaz s'écoulant dans l'espace.

8. Procédé selon la revendication 1, **caractérisé en ce que**, si une augmentation de pression est détectée dans la conduite (14), la buse (3) est dégagée en fermant la conduite (14) entre la buse (3) et la pompe et en ouvrant une conduite depuis la buse à la pression atmosphérique.

9. Procédé selon l'une des précédentes revendications, **caractérisé en ce que** la boue est chauffée avant d'être introduite dans la buse.

10. Appareil pour introduire une boue dans un espace clos (7) dans lequel du gaz est introduit à une vitesse d'écoulement donnée, lequel appareil comprend :
- une conduite d'introduction (14), et
- un dispositif (1) pour introduire la boue dans la conduite d'introduction (14),
**caractérisé**
- **par** une buse (3) montée à l'extrémité de la conduite d'introduction (14), l'ouverture de la buse étant agencée à une certaine distance de la paroi de l'espace clos (7), buse à travers laquelle la boue peut être extrudée dans l'espace clos sous forme de bande uniforme.

11. Appareil selon la revendication 10, **caractérisé en ce que** l'ouverture de buse est orientée dans la direction d'écoulement du gaz, de préférence parallèlement à la direction d'écoulement.

12. Appareil selon la revendication 11, **caractérisé en ce que** l'ouverture de buse est située à une distance, depuis l'endroit où le tuyau d'axe de buse dépasse de la paroi (13) de l'espace clos, telle qu'une turbulence provoquée par le tuyau, dans l'écoulement autour du tuyau, est essentiellement atténuée avant l'ouverture de buse.

13. Appareil selon la revendication 10, **caractérisé en ce que** le dispositif pour introduire la boue est une pompe à vis excentrique (1).

14. Appareil selon la revendication 10, **caractérisé par** une vanne (15) permettant d'interrompre l'écoulement dans la conduite d'introduction (14) et par un raccord de déversement monté sur la conduite (14) entre la vanne (15) et la buse (3).

15. Appareil selon la revendication 13, **caractérisé par** un élément (16) adapté pour mesurer la pression dans la conduite d'introduction (14).
